# EUROPEAN PATENT APPLICATION

(11) **EP 1 304 846 A1**
(43) Date of publication of application: **23.04.2003**
(21) Application number: 01203986.3
(22) Date of filing: 19.10.2001
(51) Int. Cl.: H04L 29/06, H04L 12/28

(54) **A device for communicating data within a theatre**

(71) Applicant: Joost, Bert, 8500 Kortrijk (BE)
(72) Inventor: Bert, Joost, 8500 Kortrijk (BE); Gillissen, Alain, 3000 Leuven (BE)
(74) Representative: Quintelier, Claude

(57) **Abstract**

A device for communicating data within a theatre, which device comprises at least one handhold unit with a display screen. The handhold unit is provided to communicate with a base station which is connected to a local area network provided to be set up within the theatre. A communication server is also connected to the local area network. The handhold unit enables an attendant to communicate with the staff on duty by transmitting messages related to theatre items and operating parameters.

## Description

The present invention relates to a device for communicating data within a movie theatre.

Communication of data within a theatre room is generally rather limited to a display showing the exit and to a loudspeaker which the staff on duty can use for announcing messages.

A movie theatre attendant has little or no communication with the staff on duty except may be to cry within the theatre room. The latter way of expressing of emotions is however not appreciated by the rest of the attendants as it disturbs them considerably. Situations can however occur where the attendant wants to communicate data to the staff on duty in order to inform the latter of for example problems that could occur during a movie performance. Such problems could for example be that the sound quality is bad or that it is too hot in the room. There are also nearly no provisions where the attendant can communicate to the management his general appreciation about the proposed show. Although it is known to use microphones in conference rooms for communication between the participants, such a solution is not usable when communication must take place in silence.

It is an object of the present invention to provide the theatre attendant a communication tool enabling him or her to establish a communication with the staff on duty and/or the management, without disturbing the other theatre attendants.

A device according to the invention is therefor characterised in that said device comprises at least one handhold unit having a memory and processing capacity and a local area network provided to be set up within said theatre and to which a communication server, and at least one base station are connected, each of said base stations being provided with first communication means provided for wireless communication, according to a first predetermined communication protocol, with second communication means arranged within each of said handhold units, said communication server being connected to a client application module provided to communicate with a server which is further connected to a database provided for storing a set of theatre items relating to events running in said theatre and a series of operating parameters defining operating conditions within said theatre, said communication server being provided for retrieving theatre items and operating parameters from said database and for loading them into said memory of said handhold units, each of said handhold units being provided with a display for displaying at least a selection of said theatre items and said operating parameters loaded into said memory, said handhold unit being further provided with selection means for selecting among said displayed theatre items and operating parameters, said selection means being connected to said second communication means in order to transmit selected theatre items and operating parameters to said second communication means which are further provided for transmitting said selected theatre items and operating parameters to said base station upon receipt thereof, said base station being provided to transmit said selected theatre items and operating parameters to said communication server.

The attendant can ask the staff on duty for one of the handhold units. In such a manner he or she can use the selection means in order to select, among the operating parameters stored in the memory, those which will express what he or she wants to communicate. The first and second communication means enable to establish a wireless data communication with the base station assigned to the theatre room in which the attendant is located. Since the base station and the communication server are connected to the local area network, the parameters selected by the attendant and transmitted to the communication server will reach the staff on duty or the management. In such a manner, the staff on duty and/or the management will receive the data from the attendant and a communication, which does not disturb the other attendants, since displayed items and parameters are selected and transmitted, is established.

A first preferred embodiment of a device according to the invention is characterised in that said client application module and said communication server are provided to communicate with each other according to a second predetermined communication protocol. By using different protocols for communication between the base stations and the handhold units on the one hand and the communication server and the client application module on the other hand, a more transparent and efficient communication is obtained.

Preferably said client application module is formed by a first workstation connected to said local area network. In such a manner the communication between the communication server and the client application module does not require an additional infrastructure as the same local area network is used.

Preferably said communications server is connected to a further communication module, in particular a DECT module, provided for wireless communication with a mobile communication element. This enables to reach the staff on duty by mobile communication means.

A second preferred embodiment of a device according to the present invention is characterised in that said database comprises a set of tables, to each table a unique identification tag is assigned, a first subset of said set of tables being provided for storing said theatre items and a second subset for storing said operating parameters.

A third preferred embodiment of a device according to the present invention is characterised in that said communication server is provided for serially loading said theatre items and operating parameters by building up a series of datablocks, each datablock being formed by a data content of one table, each datablock within said series being delimited by at least one flag.

A fourth preferred embodiment of a device according to the present invention is characterised in that each handhold unit has a first identification field within said memory which is provided for storing a first identifier identifying a theatre room within said theatre assigned to the handhold unit, said communication server being provided with a theatre room table for listing each of said identifiers for each of said theatre rooms.

The invention will now be described in more details with reference to the drawings illustrating a preferred embodiment of a device according to the present invention as well as its operating mode. In the drawings :
figure 1 illustrates a preferred embodiment of a device according to the present invention;
figure 2 illustrates an example of a database structure used in the present device;
figure 3 illustrates a screen print used for assigning a handhold unit to an attendant;
figure 4 illustrates a screen print used for managing the distribution of handhold units; and
figure 5 to 8 illustrate screen prints used for communication between attendant and management.

In the drawings a same reference sign has been assigned to a same or analogous element.

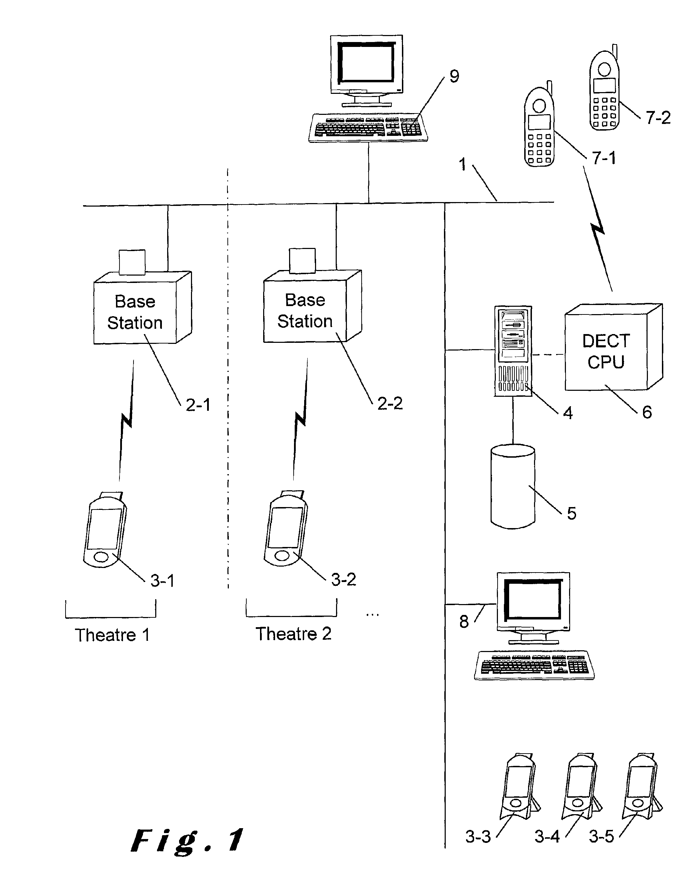

The device for communicating data within a theatre, shown in figure 1, comprises a Local Area Network 1 (LAN) which is provided to be set up within the theatre (not shown). The word "theatre" should be interpreted in a large sense so that not only movie theatres are considered but also conference rooms. In case the theatre is a complex comprising several theatre rooms, the LAN extends preferably to all or at least a large amount of the theatre rooms. Preferably, in each theatre room to which the LAN extends, a base station 2-1, 2-2 is connected to the LAN. It could however also be possible to assign a same base station to two or even more theatre rooms. Each base station 2 is provided with first communication means provided for wireless communication with second communication means arranged within a handhold unit 3. The first and second communication means are provided to communicate with each other according to a predetermined communication protocol such as for example the IEEE 802.11b protocol. This protocol enables a complete transparency between the Ethernet operating LAN and the wireless first and second communication means. With this protocol there is no need for conversion of the communicated data and the protocol is also suitable for different applications processed by the handhold unit.

The handhold unit 3 is for example formed by a Pocket Personal Computer (PPC) manufactured for example by Compaq (registered Trademark). The handhold unit comprises a memory and processing capacity which are connected to each other for example by means of a bus. The memory is provided for storing theatre items and operating parameters as will be described hereinafter.

A communication server 4 is also connected to the LAN 1. This communication server 4 is for example located in a computer room of the theatre. A central database 5 being connected to the communication server. The central database is provided for storing a set of theatre items relating to events running in the theatre, such as for example the title of the movies, the number of the theatre rooms, questions relating to the running movies, etc... The central database is further provided to store a series of operating parameters defining operating conditions for the items, such as for example sound quality and volume, sharpness of the picture, climatic conditions within the theatre room etc...

A Central Processing Unit (CPU), in particular a DECT (Digital Enhanced Cordless Telecommunication) CPU 6 is connected with the communication server. The DECT CPU is provided for wireless communication with mobile communication elements such as DECT handsets 7-1, 7-2, which are handed over to the staff on duty in order to have mobile communication with them. Of course the choice of DECT handsets with a DECT CPU is a preferred embodiment and other alternatives could be used. The latter use could also be only optional if no mobile communication would be required.

A client application module, in the present embodiment formed by a first workstation 8, is connected to the communication server 4 in order to communicate with the latter. In the embodiment shown in figure 1, the client application module is connected via de LAN 1 to the communication server. It could however also be possible to connect the client application module directly to the communication server without using the LAN. The communication between the client application module and the communication server is realised by using a second communication protocol, in particular DCOM protocol in combination with TCP/IP. The latter protocol is used for its functionality in transferring tables stored in the central database. This protocol is totally transparent with respect to the physical location where the module and the server are installed.

The first workstation 8 or client application module is preferably installed at the reception desk of the theatre and operated by the staff. The first workstation is provided for retrieving theatre items and operating parameters from the database 5 and load them into the memory of the handhold units 3-1, 3-2, .... 3-5. The handhold units which are not already assigned to a theatre room are preferably stored at said reception desk with the staff on duty.

An operating workstation 9 is further connected to the LAN and is preferably operated by the technical staff. It could however also be possible to combine the operating workstation 9 with the first workstation.

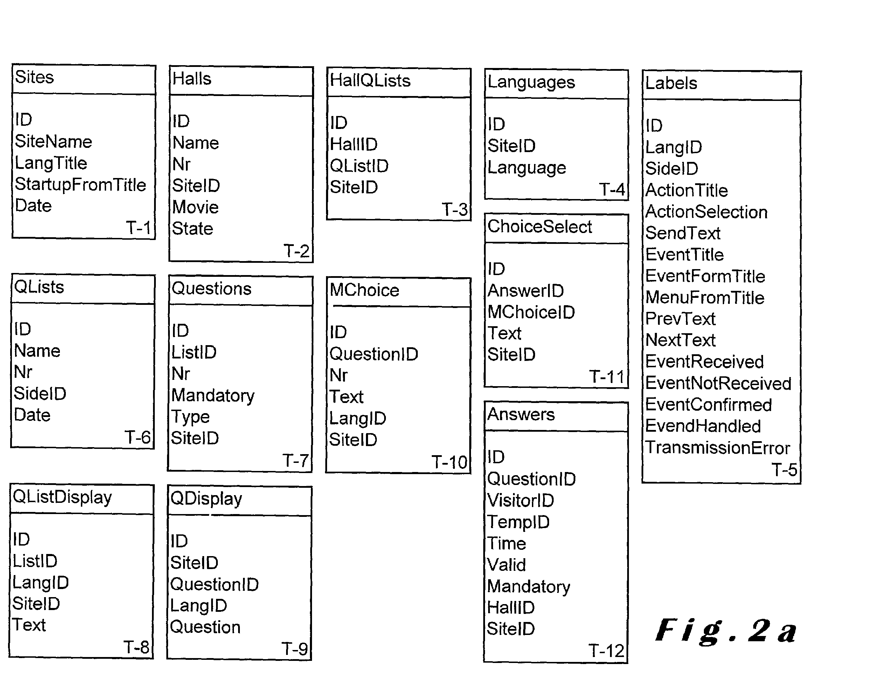

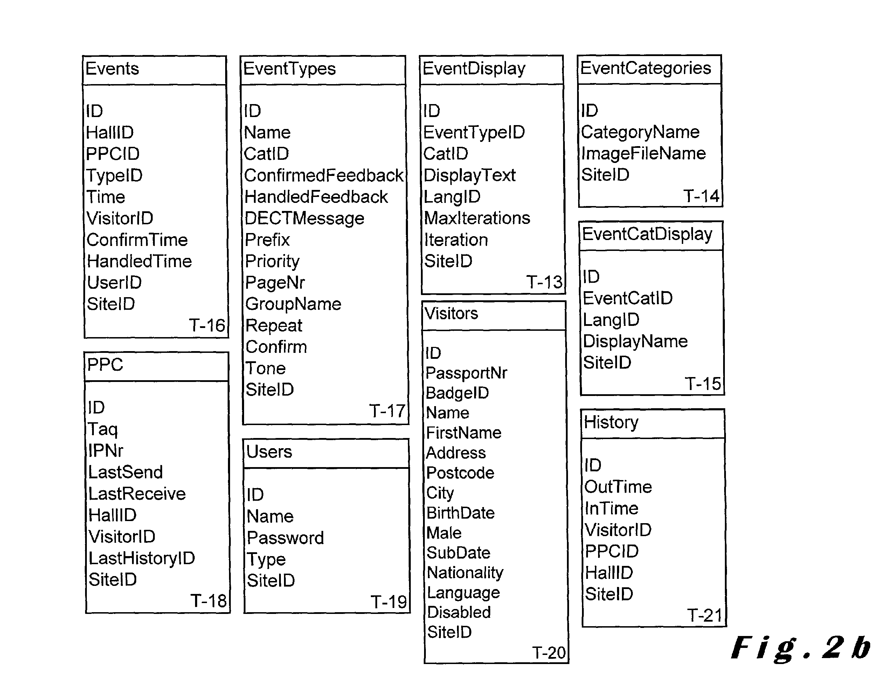

Figure 2 illustrates an example of the database structure. The database comprises a set of tables T-1, T-2, ....T-n, each table of the set storing a series of records relating to a theatre item or operating parameter. So for example :
table T-1 stores the site name where the theatre is located as well as titles in different languages in order to provide titles to different features to be displayed on the handhold unit. Table T-1 also stores a date indicating at what date the last update of the tables was realised.
table T-2 stores data about the theatre room or hall such as for example the name and/or number of the hall. Table T-3 stores the different questions for the different halls. This table enables to assign to each hall a particular question list which can also regularly be updated. Table T-4 stores language parameters which enable to present the information in different languages. The language choice could further be linked to the site location.
table T-5 stores a series of tables which enables to create different display contents to be displayed.
the tables T-6, T-7, T-8, T-9 and T-10 all relate to the questions themselves which will be asked to an attendant and his choice as answer. The questions are grouped in lists. In particular table T-6 stores the list with question numbers which will be displayed before and after the show, whereas table T-7 stores the content of each question. The tables T-8 and T-9 provide display tools in order to display the questions. Table T-10 stores data in order to identify the choice which the attendant made upon answering the questions. The questions and answers were written using SQL language enabling to establish an easy relationship among them. The tables T-11 and T-12 are operationally linked. Table T-11 stores data enabling to make a selection among different answers which are themselves stored in table T-12. The answers are built up according to a predetermined structure and format in order to make their transmission and processing more easy.
the tables T-13, T-14 and T-15 relate to events running in the theatre as well as to operating parameters such as the sound and image quality, the security inside the hall or outside. Also language provisions are provided in these tables in order to display events and operating parameters in different languages.
the table T-16 stores data establishing a link between each hall and the events running in each particular hall. The table also stores to which attendant the handhold units for each hall have been assigned. Table T-17 stores event types enabling communication with the staff on duty. Table T-18 stores operation tools enabling the handhold unit to operate. This table for example comprises a tag identifying the particular handhold units, a TCPIP address and data related to the transmitted information. Table T-14 stores data enabling to identify the user to which each of the handhold units have been assigned. Table T-20 stores the data of all the attendants who are entitled to make use of a handhold unit. This table for example comprises their name, address, passport number as well as an identifier identifying if the concerned attendant has not lost his right to make use of the handhold unit.
table T-21 stores history data.

Each table has a unique identification tag (ID) which is preferably stored as a first data therein. The tables T-16 to T-21 form a subset which can preferably only be accessed by the staff on duty or the management.

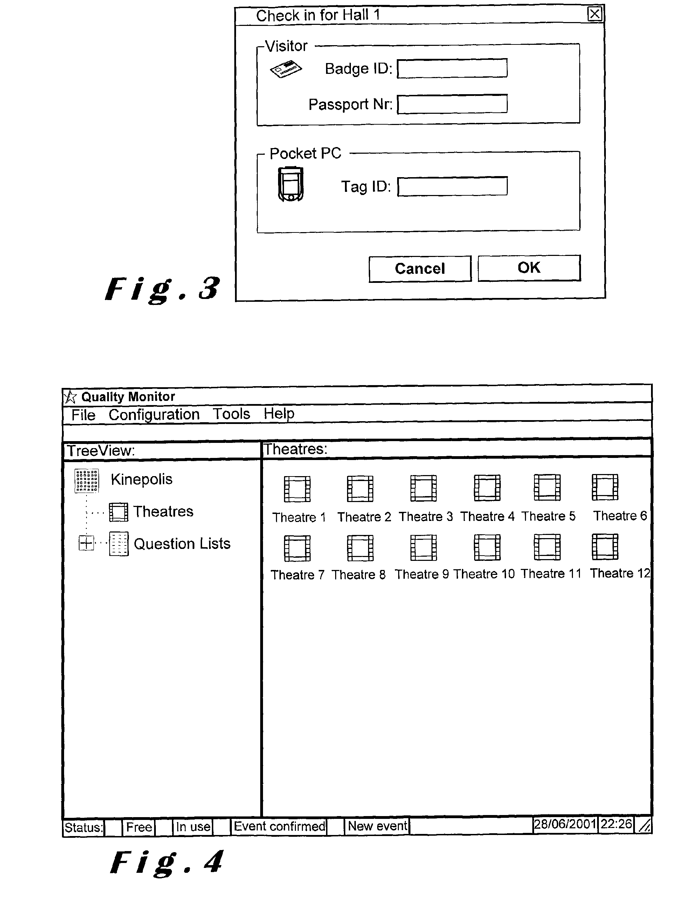

Suppose now that an attendant wants to make use of a device according to the present invention. The attendant will present himself at the reception desk of the theatre in order to pick up a handhold unit 3. The attendant must preferably be registered in order to obtain a handhold unit for recognising the attendant's dialogue content as well as for security purposes. The registration could be realised by means of a badge allotted to the attendant. The data relating to the attendant is stored in table T-20. Figure 3 shows an example of a screen enabling to log in an attendant. The attendant's badge and passport number are logged in and consequently the number of the allotted handhold unit will appear on the display and will be stored in table T-19.

Preferably only one handhold unit will be given per theatre hall or room in order to avoid conflicts such a for example that one attendant would consider the sound volume too loud and the other not loud enough.

In order to verify if for the considered theatre hall the handhold unit assigned to this considered theatre hall has already been given to some attendant, the operator at the workstation desk can call an overview screen, such as illustrated in figure 4, showing the actual status of all the handhold units. The overview screen uses for example a colour code whereby a white colour indicates that the handhold unit is not in use, a green colour indicates that is has already been attributed, a red colour indicates that it is in use with new events pending and a yellow colour that it is in use with untreated new events.

Before the handhold is given to the attendant a check is made in order to verify if the data stored in the memory of the handhold unit is still up to date. This is for example realised by comparing the data in table T-1 of the central database with the one stored in the memory of the handhold unit which will be assigned to the user. If the data do not match, then the content of the memory of the handhold unit is refreshed by downloading the content of the tables T-1 to T-15 into the handhold unit's memory. This downloading is preferably realised in a serial manner. The communication between the handhold unit and the communication server is realised via the client application server 8. Of course upon initialising a handhold unit, the data from the tables T-1 to T-15 are downloaded into the memory of the handhold unit.

If a download operation is required a connection between the handhold unit and the communication server is established. The handhold unit sends then preferably a message to the communication server by forwarding an upload code identifying the considered handhold unit. Upon recognising the upload code, the data of the table T-1 to T-15 will be retrieved from the database and forwarded to the handhold unit using the local area network. Each table content which is downloaded is preceded by a start or header tag and ended by a carriage return in order to distinguish the different tables' content from each other. In such a manner, it is possible to download the different tables' content in a serial manner. Since each table has its own identifier, it is possible to recognise the different tables' content once received by the handhold unit and to store them table content by table content into the memory of the handhold unit. Each of the downloaded operating parameters have a number and a status flag in order to enable an easy processing thereof.

Each handhold unit has an identification field within said memory which is provided for storing a unique identifier, identifying a theatre room within said theatre. This unique identifier is either downloaded together with the table content or hardwired within the memory. The latter embodiment however gives less flexibility since the handhold unit can then only be assigned to one theatre hall. The use of these unique identifiers enables the first workstation to have a table for listing each of said identifiers and to visualise on the screen which handhold units have already been assigned. The table also comprises a further identification field for storing a second identifier indicating the hall to which it has been assigned.

Once the operator at the operator desk has assigned a handhold unit to the attendant and confirmed the latter into its operating system, the status on the display screen (figure 4) will change and the attendant will receive his handhold unit.

The attendant will take his handhold unit with him into the theatre hall where the event of his choice will take place. In such a manner, a contact can be established by the attendant and the staff on duty of the theatre. The communication between the handhold unit 3 and the workstations will be realised via the base stations 2, using the first and second communication means. Once a message is picked up by a base station, the latter will transfer it to the communication server via the network 1. All the data communicated between the handhold unit and the base station will be sent on-line by establishing preferably a TCP/IP based connection using a Win Sock protocol. This protocol is very efficient and uses a minimum LAN capacity.

The communication server will handle all data transmitted from the handhold unit and store it in the central database. Preferably there is a serial link to the DECT CPU which enables the communication server to send SMS messages to one or more DECT handsets. The latter handsets can also preferably be used as a normal telephone.

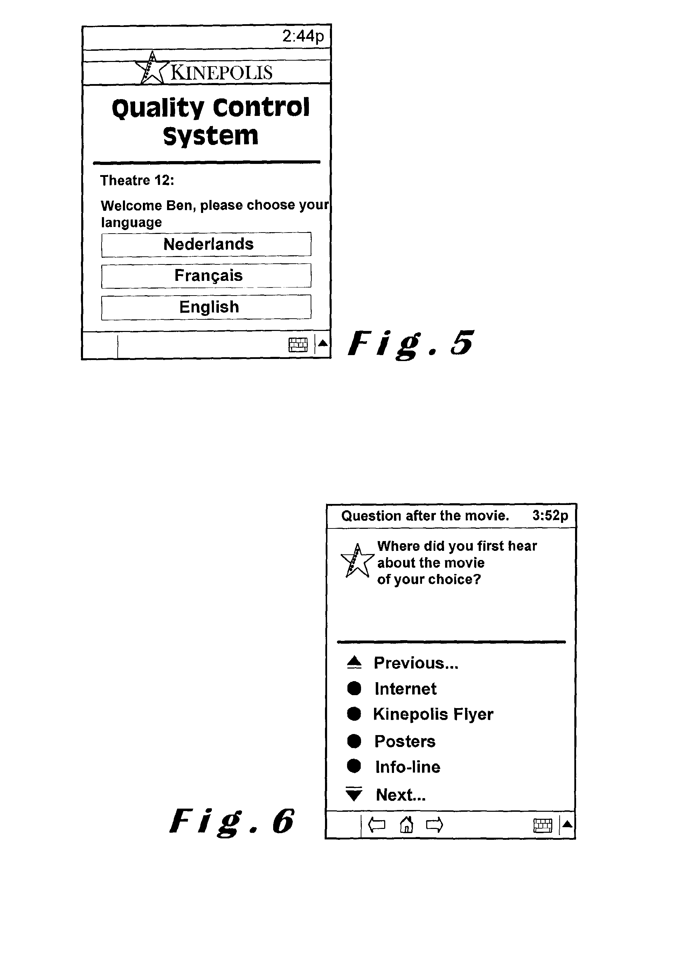

Preferably before the theatre event begins, the attendant will have to answer one or more questions presented in the form of a list such as illustrated in figure 5 and 6. The questions are displayed on the screen of the handhold unit and the answers are given by means of a further list enabling a multiple choice among the presented questions. One of the questions is for example a language choice (fig. 5) and "Where did you first hear about the movie of your choice ?" (fig. 6). The presented answers comprise for example Internet, posters ....The attendant can obtain the list of questions for example by pointing at the list's of questions icon on the screen or they are immediately displayed upon handing over the handhold unit. The questions themselves are generated within the handhold unit using the table content stored in the memory. The number of the hall, the chosen language and the list of questions assigned to the hall are used to generate and display the questions. Since the questions were updated upon handing over the handhold unit, only actual questions are displayed. The generation of questions enables in such a manner a large number of off-line users in a same theatre complex. The questions at this stage generally relate to information on how the attendant was informed about the event, why he or she made this particular choice, whether he or she had difficulties to reach the theatre etc...

Once the questions are displayed on the screen, the attendant will use selection means of the handhold unit for selecting the successive answers displayed on the screen. Once the answer has been chosen, the latter is stored within the memory using table T-11 and T-12. Only when the attendant will return the handhold unit, the stored answers will be read and transferred to the communication server. Of course it could also be possible to send the answers using the first and second communication means. The transfer of the stored answers is realised by reading tables T-11 and T-12.

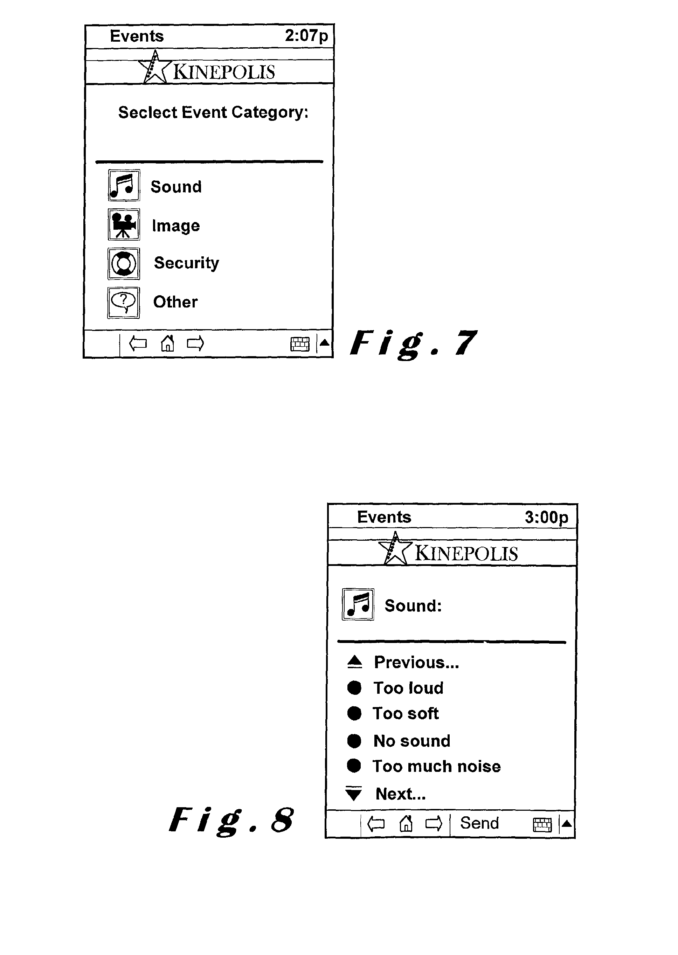

During the show, the attendant can report several operating parameters to the staff on duty. Figure 7 shows some examples of operating parameters which can be selected by using the handhold unit. So, for example the attendant can choose between "sound, image, security or other". The attendant can then select the operation parameter relating to the problem he or she has encountered. The selection is for example realised by indicating the displayed operation parameter. Once the attendant made his choice, a new list of features is displayed as illustrated in figure 8. The attendant can then report that the sound is too soft. For this purpose he will select the operating parameter indicating the occurring problem. Once the operating parameter selected, the latter will be sent to the base station in order to reach the first workstation or the operating workstation. This is realised by the first and second communication means. Once the information has reached the base station, that information is transmitted to the communication server via the LAN. The server will forward this information to the DECT station. The operator or receptionist receiving the transmitted operating parameter on his workstation or his DECT handset will confirm the receipt of the operating parameter by sending a confirmation message to the handhold unit having transmitted the message. For this purpose, the handhold unit will include its first identifier into the transmitted operating parameter, so that the workstation can recognise the handhold unit having issued the operating parameter. After receipt of the confirmation message, the latter will be displayed on the screen of the handhold unit in order to inform the attendant that his or her message has been received. Once the staff on duty has handled the concerned operating parameter, a "handling accomplished" message is transmitted to and displayed on the screen of the handhold unit. In such a manner, the attendant is informed that his or her request has indeed been dealt with.

Preferably after the show the attendant has to answer a further set of questions relating to the content of the show itself. This is realised in an analogous manner as the answering of the questions before the show started.

The attendant has of course to return the handhold unit to the staff on duty once the show is over. The staff on duty will then log out the attendant thus initiating an uploading of all the answers to the central database and making the handhold unit available for a further attendant.

The device can operate according to different modes. So for example in a desk mode only the staff on duty will be entitled to use the handhold unit. In an operator mode only the operators will use the handhold unit and in an administration mode only the management will use the handhold. In such a manner it is possible to provide a large scope of operating possibilities to a same handhold unit while avoiding unauthorised use. Each operating mode can be password protected.

## Claims

1. A device for communicating data within a theatre, **characterised in that** said device comprises at least one handhold unit having a memory and processing capacity and a local area network provided to be set up within said theatre and to which a communication server, and at least one base station are connected, each of said base stations being provided with first communication means provided for wireless communication, according to a first predetermined communication protocol, with second communication means arranged within each of said handhold units, said communication server being connected to a client application module provided to communicate with a server which is further connected to a database provided for storing a set of theatre items relating to events running in said theatre and a series of operating parameters defining operating conditions within said theatre, said communication server being provided for retrieving theatre items and operating parameters from said database and for loading them into said memory of said handhold units, each of said handhold units being provided with a display for displaying at least a selection of said theatre items and said operating parameters loaded into said memory, said handhold unit being further provided with selection means for selecting among said displayed theatre items and operating parameters, said selection means being connected to said second communication means in order to transmit selected theatre items and operating parameters to said second communication means which are further provided for transmitting said selected theatre items and operating parameters to said base station upon receipt thereof, said base station being provided to transmit said selected theatre items and operating parameters to said communication server.

2. A device as claimed in claim 1, **characterised in that** said client application module and said communication server are provided to communicate with each other according to a second predetermined communication protocol.

3. A device as claimed in claim 1 and 2, **characterised in that** said first communication protocol is formed by a Win Sock protocol and said second communication protocol by a DCOM protocol.

4. A device as claimed in any one of the claims 1 to 3, **characterised in that** said client application module is formed by a first workstation connected to said local area network.

5. A device as claimed in any one of the claims 1 to 4, **characterised in that** said communications server is connected to a further communication module, in particular a DECT module, provided for wireless communication with a mobile communication element.

6. A device as claimed in any one of the claims 1 to 5, **characterised in that** said database comprises a set of tables, to each table a unique identification tag is assigned, a first of said set of tables being provided for storing said theatre items and a second subset for storing said operating parameters.

7. A device as claimed in claim 6, **characterised in that** said communication server is provided for serially loading said theatre items and operating parameters by building up a series of datablocks, each datablock being formed by a data content of one table, each datablock within said series being delimited by at least one flag.

8. A device as claimed in anyone of the claims 1 to 7, **characterised in that** each handhold unit has a first identification field within said memory which is provided for storing a first identifier identifying a theatre room within said theatre assigned to the handhold unit, said communication server being provided with a theatre room table for listing each of said identifiers for each of said theatre rooms.

9. A device as claimed in claim 8, **characterised in that** said theatre room table is further provided with a second identification field for storing a second identifier indicating that one of said handhold units has been assigned and to which theatre room it has been assigned.
